# EUROPÄISCHE PATENTSCHRIFT

(11) **EP 2 930 490 B1**
(45) Veröffentlichungstag und Bekanntmachung des Hinweises auf die Patenterteilung: **25.05.2016**
(21) Anmeldenummer: 14001659.3
(22) Anmeldetag: 12.05.2014
(51) Int. Cl.: G01M 7/02

(54) **Verbindungselement zur Übertragung einer Erregerschwingung in einem Schwingsystem**
Connecting element for transmitting an exciter oscillation to an oscillating system
Élément de liaison destiné au transfert d'une vibration de source dans un système vibratoire

(30) Priorität: 04.04.2014 EP 14001257
(43) Veröffentlichungstag der Anmeldung: 14.10.2015
(73) Patentinhaber: Prisma Engineering Maschinen- und Motorentechnik GmbH, 8041 Graz (AT)
(72) Erfinder: Gschweitl, Ernst, 8200 Gleisdorf (AT)
(74) Vertreter: Grättinger Möhring von Poschinger Patentanwälte Partnerschaft

(56) Entgegenhaltungen:
- US-A- 2 228 499
- US-B1- 7 013 731

## Beschreibung

Die Erfindung betrifft ein Verbindungselement zur Übertragung einer Erregerschwingung in einem Schwingungssystem, insbesondere eines Resonanzprüfstands gemäß dem Oberbegriff von Anspruch 1.

Dabei geht es um die Übertragung periodisch oszillierender Kräfte auf einen Prüfling zwecks Verprobung von Schwingungsbelastungen auf Seiten des Prüflings.

Das Verbindungselement ist dabei einerseits mit einem Aktuator zum Erzeugen der Erregerschwingung, andererseits mit dem Prüfling gekoppelt.

Es wurde eine Vorrichtung zur Belastungsprüfung rotatorischer Prüflinge in Form von Radsätzen für Schienenfahrzeuge vorgeschlagen, bei der eine von Aktuatoren erzeugte Erregerschwingung mittels Koppelstäben auf den jeweiligen Prüfling übertragen wird. Diese Vorrichtung ist in der europäischen Patentanmeldung EP 14001257 beschrieben, deren Gegenstand insoweit auch zum Gegenstand vorliegender Patentanmeldung erklärt wird.

Nach dem älteren Vorschlag sind zur Verprobung der Umlaufbiegung des Prüflings mindestens drei gleichmäßig über einen Kreisumfang um die Drehachse des Prüflings angeordnete Koppelstäbe vorgesehen, die im wesentlichen spielfrei einerseits mit einem Aktuator, andererseits mit dem Prüfling gekoppelt sind. Die Enden der Koppelstäbe sind dabei mittels einer dreh- und biegeelastischen Fügeverbindung derart spielfrei befestigt, dass die auf den Prüfling übertragenen Erregerkräfte der Erregerschwingung entsprechen. Von den über einen Kreisumfang um die Drehachse des Prüflings angeordneten Koppelstäben wird dabei durch das mechanische Einwirken der periodisch oszillierenden Erregerkräfte ein um die feststehende Drehachse des Prüflings umlaufendes Moment erzeugt.

Ferner ist ein Verbindungselement der eingangs genannten Art in US 2 228 499 A und in US 7 013 731 B1 offenbart, welches einerseits mit einem Aktuator zur Erzeugung einer Erregerschwingung, andererseits mit dem Prüfling im Wesentlichen spielfrei gekoppelt ist.

Der vorliegenden Erfindung liegt demgegenüber die Aufgabe zugrunde, ein auf minimale Erregerkräfte ansprechendes Verbindungselement der eingangs genannten Art, dessen Koppelanschlüsse den Anforderungen hoher Elastizität bei geringer Baugröße entsprechen, zu schaffen, welches außerdem empfindlich anspricht, so dass es geeignet ist, die Regelbarkeit bei einem Prüfstand zu verbessern.

Diese Aufgabe wird erfindungsgemäß durch Ausgestaltung des Verbindungselements gemäß dem Kennzeichen von Patentanspruch 1 gelöst. Dabei sind die Koppelanschlüsse im Wesentlichen spielfrei ausgestaltet, bevorzugt in Art einer dreh- und/oder biegeelastischen Fügeverbindung oder einer mechanischen Einspannung.

Hinsichtlich der Ausgestaltung der Koppelanschlüsse geht es insbesondere darum, eine spielfreie Verbindung sowohl auf der Aktuatorseite als auch auf Seiten des Prüflings zu realisieren, dennoch aber eine für die Übertragung von Erregerkräften ausreichende Elastizität zu ermöglichen, ohne dass dabei die Sinusschwingung der Erregerkräfte durch Ausweichbewegungen im Bereich der Koppelanschlüsse nachteilig verändert wird.

Das Verbindungselement selbst ist dabei im Wesentlichen stabförmig gestaltet ist, wobei ein oder beide Endabschnitte des Verbindungselements unter Einwirkung der Erregerschwingung elastisch verformbar ausgebildet sind.

Vorteilhaft sind dabei die elastischen Endabschnitte mit beiden Enden eines im Wesentlichen biegesteifen Stabteil fest verbunden.

Durch eine derartige Ausgestaltung stabförmiger Verbindungselemente werden diese einerseits in Richtung ihrer Längsachse in Art einer mechanischen Einspannung festgelegt; andererseits bleibt eine begrenzte Verformungsmöglichkeit im Bereich des jeweiligen Koppelanschlusses erhalten, so dass eine Dämpfung der Erregerschwingung weitgehend unterbleibt bzw. die Erregerschwingung in voller linearer Ausprägung mittels des Verbindungselements weitergeleitet wird.

Der erfindungsgemäße Einsatz derartiger stabförmiger Verbindungselemente ermöglicht nicht nur die gezielte Anordnung ihres Kraftangriffs, derart, dass z.B. das Schwingungssystem auf den Prüfling in dessen dynamischen Verformungsnullpunkt des in Schwingung versetzten Hingegen kann der biegesteife Stabteil bevorzugt als Koppelstab mit Hohlprofil ausgebildet sein. Auf beiden Seiten des Koppelstabs sind die Endabschnitte fest mit dem Koppelstab verbunden.

Eine bevorzugte, axial besonders stabile Ausführungsform des erfindungsgemäßen Verbindungselements besteht darin, dass die elastischen Endabschnitte jeweils mit ihrem Verbindungsende mit einer Querwand des Koppelstabes, mit ihrem äußeren Ende mit einer Endwand des Koppelstabes fest verbunden und mit Abstand von ihrem äußeren Ende an einer seitlich abkragenden mittleren Stütze befestigt sind, die sich mit Spiel durch die Wand des Hohlprofils erstreckt. Bei einer derartigen Ausführungsform ist die Mittelstütze bevorzugt mit Presssitz auf dem Endabschnitt befestigt. Die Größe der Durchtrittsöffnung der mittleren Stütze durch die Wand des Koppelstabs im Bereich seines als Überhangrohr ausgebildeten Rohrendes bemisst sich nach dem Kippwinkel der mittleren Stütze, die entweder auf dem Aktuator oder dem Prüfling befestigt ist. Im Rahmen einer spielfreien Befestigung des elastischen Endabschnitts sind Kippwinkel von < 1 Winkelgrad noch tolerierbar.

Bei einer besonders elastischen Ausbildung des Koppelanschlusses an einem erfindungsgemäßen Verbindungselement ist vorgesehen,
- dass die elastischen Endabschnitte jeweils mit ihrem Verbindungsende mit einer Querwand des Koppelstabs fest verbunden sind,
- dass sein Hohlprofil den jeweiligen Endabschnitt in Art eines Überhangrohrs übergreift und mit einer Endwand verschlossen ist,
- dass der Endabschnitt nahe seinem äußeren Ende an einer seitlich abkragenden äußeren Stütze befestigt ist, die sich mit Spiel durch die Wand des Hohlprofils erstreckt, und
- dass ferner eine innere Stütze nahe der Querwand vorgesehen ist, welche im Inneren des Hohlprofils am freien Ende eines zum Endabschnitt parallel verlaufenden, mit der Endwand verbundenen Tragelements befestigt ist.

Vorteilhaft ist das Tragelement als koaxial im Inneren des Hohlprofils angeordnetes Biegerohr ausgebildet, welches den Endabschnitt übergreift, und wobei sich die äußere Stütze mit Spiel auch durch das Biegerohr erstreckt. Dementsprechend ist dessen freies inneres Ende einerseits mit der inneren Stütze, andererseits mit der Endwand des Hohlprofils fest verbunden.

Ohne Vergrößerung der Baulänge des Verbindungselements ist bei der Ausführungsform mit zum Hohlprofil konzentrisch rücklaufendem Biegerohr eine deutlich höhere Elastizität der im Wesentlichen spielfreien Koppelung sowohl gegenüber der oben beschriebenen Ausführungsform mit einfachem Überhangrohr als auch der Ausführungsform mit einem einfachen Biegestab ohne Überhangrohr gegeben.

Im Folgenden werden die genannten Ausführungsbeispiele anhand der Zeichnung erläutert. Es zeigen jeweils in einem Axialschnitt und in der Draufsicht
- Figuren 1 und 2: eine erste Variante mit stabförmigem Endabschnitt,
- Figuren 3 und 4: eine zweite Variante mit Überhangrohr im Bereich des Endabschnitts und
- Figuren 5 und 6: eine dritte Variante mit Überhangrohr und rücklaufendem Biegerohr im Bereich des Endabschnitts.

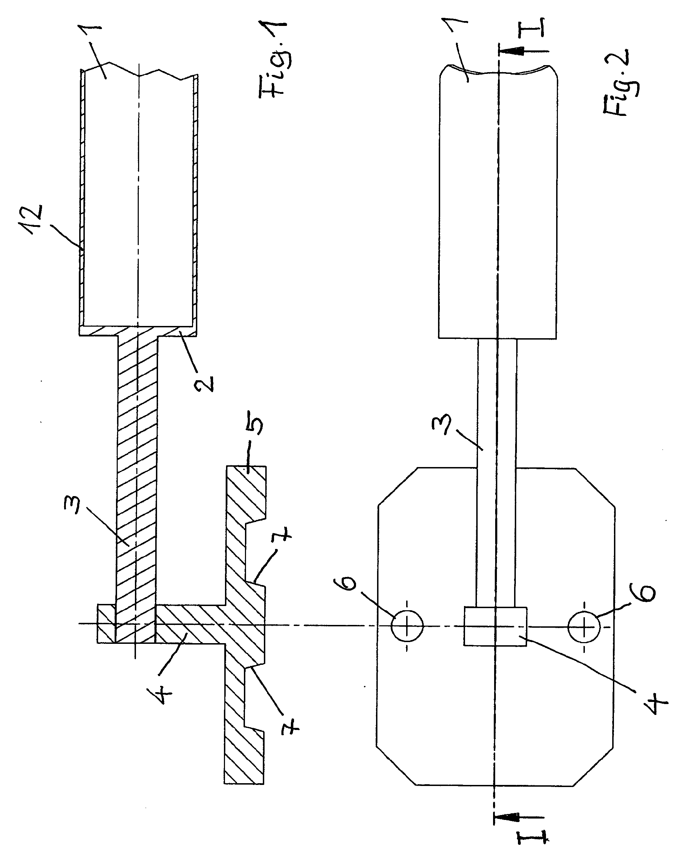

Figuren 1 und 2 zeigen eine erste Variante eines Koppelanschlusses mit einem stabförmigen Verbindungselement im Bereich eines Endabschnitts 3, wobei ein biegesteifer Stabteil als Koppelstab 1 mit Hohlprofil 12 vorgesehen ist, welches zum Endabschnitt 3 hin mit einer Querwand 2 verschlossen ist. Der Endabschnitt 3 ist mit der Querwand 2 fest verbunden. An seinem äußeren Ende ist eine Stütze 4 durch Presssitz spielfrei befestigt, welche mit einem Fußteil 5 endet. Der Fußteil 5 besitzt Befestigungsbohrungen 6, wie in Fig. 2 gezeigt, und auf seiner Befestigungsseite Nuten 7 zum Herstellen einer formschlüssigen Verbindung entweder mit einem (nicht gezeigten) Aktuator oder einem (nicht gezeigten) Prüfling eines Resonanzprüfstands.

Die Schnittlinie I-I der Fig. 2 bezeichnet die Schnittebene gemäß Fig. 1.

Unter der Einwirkung der vom Endabschnitt 3 in die Stütze 4 übertragenen Erregerschwingung sind geringfügige Ausweichbewegungen des äußeren Endes und der Stütze 4 im Rahmen der Elastizität dieser Bauteile infolge der Einwirkung von Erregerkräften zu tolerieren.

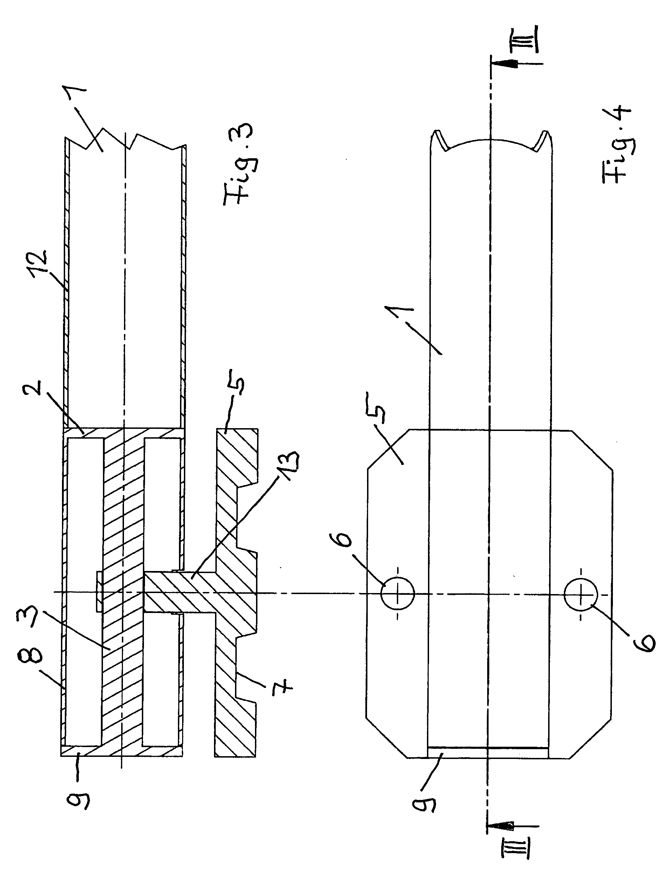

Bei der in den Figuren 3 und 4 dargestellten zweiten Variante des Koppelanschlusses eines Verbindungselements ist das den Koppelstab 1 bildende Hohlprofil 12 über eine Querwand 2 hinaus durch ein Überhangrohr 8 verlängert, welches mit einer Endwand 9 abschließt. Der stabförmige elastische Endabschnitt 3 ist mit seinem inneren Ende mit der Querwand 2, mit seinem äußeren Ende mit der Endwand 9 fest verbunden. In der Mitte ist der Endabschnitt 3 über einen Presssitz mit einer mittleren Stütze13 verbunden, die bei der ersten Variante mit einem Fußteil 5 endet. Die über den Koppelstab 1 übertragenen Erregerkräfte werden über den Endabschnitt 3 elastisch weitergeleitet und über die mittlere Stütze 13 und das Fußteil 5 übertragen bzw. in umgekehrter Richtung über die mittlere Stütze 13 in den Endabschnitt 3 eingeleitet und von dort über den Koppelstab 1 zu dessen (nicht gezeigten) entfernten Koppelanschluss weitergeleitet.

Die Bezugsziffern in Fig. 4 entsprechen jenen der oben gezeigten Figuren. Die Schnittlinie III-III bezeichnet die Schnittebene gemäß Fig. 3.

Dadurch dass bei der in den Figuren 3, 4 gezeigten zweiten Variante der Endabschnitt 3 im Inneren des Überhangrohrs 8 aufgenommen und beidseitig in zugeordneten Wandteilen befestigt ist, wird in idealer Weise eine spielfreie Koppelung bei einer dreh- und biegeelastischen Fügeverbindung verwirklicht.

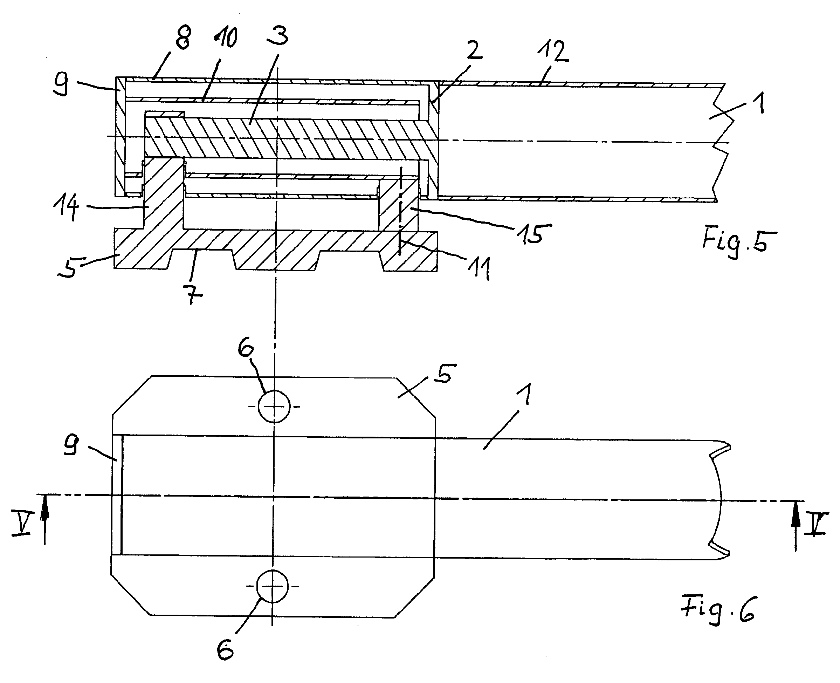

Eine dritte Variante des Verbindungselements ist in den Figuren 5 und 6 dargestellt, wobei Figur 5 einer Schnittebene V-V der Figur 6 entspricht.

Im Unterschied zur zweiten Variante gemäß den Figuren 3 und 4 zeigt Figur 5 innerhalb des Überhangrohrs 8 noch ein zu diesem koaxial rücklaufendes Biegerohr 10. Hier ist der Endabschnitt 3 nicht mit der Endwand 9 fest verbunden. An dieser ist jedoch das rücklaufende Biegerohr 10 befestigt, dessen inneres Ende mittels einer inneren Stütze 15 auf dem Fußteil 5 abgestützt ist. Die innere Stütze 15 ist längs der Achse 11 durch eine Schraubverbindung einerseits mit dem rücklaufenden Biegerohr 10 andererseits mit dem Fußteil 5 verbunden. Der stabförmige elastische Endabschnitt 3 ist an seinem äußeren Ende durch Presssitz mit einer äußeren Stütze 14 verbunden. Sowohl die äußere Stütze 14 als auch die innere Stütze 15 sind mit Spiel durch das Überhangrohr 8 bzw. das rücklaufende Biegerohr 10 hindurchgeführt.

In Figur 6 sind die für gleiche Teile verwendeten Bezugsziffern der voranstehenden Figuren eingetragen.

Im Vergleich zu den beiden anderen Varianten wird bei der dritten Variante die Elastizität der Fügeverbindung bei spielfreier Koppelung weiter verbessert.

## Patentansprüche

1. Verbindungselement zur Übertragung einer Erregerschwingung in einem Schwingungssystem, insbesondere eines Resonanzprüfstands, durch mechanisches Einwirken periodisch oszillierender Kräfte auf einen Prüfling, wobei das Verbindungselement einerseits mit einem Aktuator zur Erzeugung der Erregerschwingung, andererseits mit dem Prüfling im Wesentlichen spielfrei gekoppelt ist, derart, dass die auf den Prüfling übertragenen Kräfte der Erregerschwingung entsprechen,
**dadurch gekennzeichnet,**
**dass** das Verbindungselement im Wesentlichen stabförmig gestaltet ist, wobei ein oder beide seiner Endabschnitte (3) unter Einwirkung der Erregerschwingung elastisch verformbar ausgebildet und mittels einer Stütze (4, 13, 14) spielfrei gekoppelt sind.

2. Verbindungselement nach Anspruch 1,
**dadurch gekennzeichnet,**
**dass** die elastischen Endabschnitte (3) jeweils mit einem im Wesentlichen biegesteifen Stabteil fest verbunden sind.

3. Verbindungselement nach Anspruch 2,
**dadurch gekennzeichnet,**
**dass** die Länge des biegesteifen Stabteils der mehrfachen Länge eines Endabschnitts (3) entspricht.

4. Verbindungselement nach Anspruch 2,
**dadurch gekennzeichnet,**
**dass** der biegesteife Stabteil als Koppelstab (1) mit Hohlprofil (12) ausgebildet ist, welches den jeweiligen Endabschnitt (3) übergreift.

5. Verbindungselement nach Anspruch 4,
**dadurch gekennzeichnet,**
**dass** die elastischen Endabschnitte (3) jeweils mit ihrem Verbindungsende mit einer Querwand (2) des Koppelstabes (1), mit ihrem äußeren Ende mit einer Endwand (9) des Koppelstabs (1) fest verbunden und mit Abstand von ihrem äußeren Ende an einer seitlich abkragenden mittleren Stütze (13) befestigt sind, die sich mit Spiel durch die Wand des Hohlprofils (12) erstreckt.

6. Verbindungselement nach Anspruch 4,
**dadurch gekennzeichnet,**
**dass** der Endabschnitt (3) nahe seinem äußeren Ende an einer seitlich abkragenden äußeren Stütze (14) befestigt ist, die sich mit Spiel durch die Wand des Hohlprofils (12) erstreckt, und dass ferner eine innere Stütze (15) nahe der Querwand (2) vorgesehen ist, welche im Inneren des Hohlprofils (12) am freien Ende eines zum Endabschnitt (3) parallel verlaufenden, mit der Endwand (9) verbundenen Tragelements befestigt ist.

7. Verbindungselement nach Anspruch 6,
**dadurch gekennzeichnet,**
**dass** das Trageelement als koaxial im Inneren des Hohlprofils (12) angeordnetes Biegerohr (10) ausgebildet ist, welches den Endabschnitt (3) übergreift, und wobei sich die äußere Stütze (14) mit Spiel auch durch das Biegerohr (10) erstreckt.

## Claims

1. A connecting element for transmitting an excitation vibration in a vibration system, in particular of a resonance test stand, by the mechanical action of periodically oscillating forces on a test object, wherein the connecting element is coupled in a substantially play-free manner to an actuator for generating the excitation vibration on one side and to the test object on the other side, in such a manner that the forces transmitted to the test object correspond to the excitation vibration,
**characterised in that**
the connecting element is substantially rod-shaped, wherein one or both of the end sections (3) thereof are constructed to be elastically deformable under the effect of the excitation vibration and are coupled in a play-free manner by means of a strut (4, 13, 14).

2. The connecting element according to Claim 1,
**characterised in that**
the elastic end sections (3) are each connected fixedly to a substantially rigid rod part.

3. The connecting element according to Claim 2,
**characterised in that**
the length of the rigid rod part corresponds to multiple times the length of an end section (3).

4. The connecting element according to Claim 2,
**characterised in that**
the rigid rod part is constructed as a coupling rod (1) having a hollow profile (12), which fits over the respective end section (3).

5. The connecting element according to Claim 4,
**characterised in that**
the elastic end sections (3) are each connected fixedly at the connecting end thereof to a transverse wall (2) of the coupling rod (1) and at the outer end thereof to an end wall (9) of the coupling rod (1),
and are fastened at a distance from the outer end thereof to a laterally protruding central strut (13), which extends with play through the wall of the hollow profile (12).

6. The connecting element according to Claim 4,
**characterised in that**
the end section (3) is fastened close to the outer end thereof to a laterally protruding outer strut (14), which extends with play through the wall of the hollow profile (12), and that an inner strut (15) is also provided close to the transverse wall (2), which strut is fastened inside the hollow profile (12) on the free end of a support element, which runs parallel to the end section (3) and is connected to the end wall (9).

7. The connecting element according to Claim 6,
**characterised in that**
the support element is in the form of a flexible tube (10), which is arranged coaxially inside the hollow profile (12) and fits over the end section (3), and wherein the outer strut (14) also extends with play through the flexible tube (10).

## Revendications

1. Élément de liaison pour le transfert d'une oscillation excitatrice dans un système oscillatoire, en particulier un banc d'essai à résonance, par action mécanique de forces oscillant périodiquement sur un échantillon, l'élément de liaison étant couplé sensiblement sans jeu d'une part à un actionneur pour générer l'oscillation excitatrice et d'autre part à l'échantillon de manière à ce que les forces transférées sur l'échantillon correspondent à l'oscillation excitatrice,
**caractérisé en ce que**
l'élément de liaison est conformé sensiblement en forme de barre, une ou deux de ses sections terminales (3) ayant une conformation élastiquement déformable sous l'effet de l'oscillation excitatrice et étant couplées sans jeu au moyen d'une colonne (4, 13, 14).

2. Élément de liaison selon la revendication 1,
**caractérisé en ce que**
les sections terminales élastiques (3) sont respectivement reliées fixement à une pièce en forme de barre sensiblement rigide à la flexion.

3. Élément de liaison selon la revendication 2,
**caractérisé en ce que**
la longueur de la pièce en forme de barre rigide à la flexion équivaut à plusieurs fois la longueur d'une section terminale (3).

4. Élément de liaison selon la revendication 2,
**caractérisé en ce que**
la pièce en forme de barre rigide est réalisée sous forme d'une barre de couplage (1) à profil creux (12) qui chevauche la section terminale respective (3).

5. Élément de liaison selon la revendication 4,
**caractérisé en ce que**
les sections terminales élastiques (3) sont respectivement reliées fixement par leur extrémité de liaison à une paroi transversale (2) de la barre de couplage (1), par leur extrémité extérieure à une paroi terminale (9) de la barre de couplage (1) et sont fixées à distance de leur extrémité extérieure à une colonne centrale à collerette latérale (13) qui s'étend avec du jeu à travers la paroi du profil creux (12).

6. Élément de liaison selon la revendication 4,
**caractérisé en ce que**
la section terminale (3) est fixée près de son extrémité extérieure à une colonne extérieure à collerette latérale (14) qui s'étend avec du jeu à travers la paroi du profil creux (12) et qu'il est prévu en outre une colonne intérieure (15) proche de la paroi transversale (2) et qui est fixée à l'intérieur du profil creux (12) à l'extrémité libre d'un élément porteur orienté parallèlement à la section terminale (3) et relié à la paroi terminale (9).

7. Élément de liaison selon la revendication 6,
**caractérisé en ce que**
l'élément porteur est réalisé sous forme d'un tube flexible (10) disposé coaxialement à l'intérieur du profil creux (12) et qui chevauche la section terminale (3), la colonne extérieure (14) s'étendant avec du jeu dans le tube flexible (10).
